(19) Europäisches Patentamt / European Patent Office / Office européen des brevets

(11) **EP 3 100 371 B1**

(12) **EUROPEAN PATENT SPECIFICATION**

(45) Date of publication and mention of the grant of the patent:
**28.02.2018 Bulletin 2018/09**

(51) Int Cl.:
*H04B 7/0413* (2017.01)  *H04B 7/10* (2017.01)
*H04W 72/08* (2009.01)

(21) Application number: **14702019.2**

(22) Date of filing: **30.01.2014**

(86) International application number:
**PCT/EP2014/051801**

(87) International publication number:
**WO 2015/113603 (06.08.2015 Gazette 2015/31)**

(54) **METHOD AND SYSTEM FOR PROVIDING DIVERSITY IN POLARIZATION OF ANTENNAS**

VERFAHREN UND SYSTEM FÜR DIVERSITÄT BEI DER POLARISATION VON ANTENNEN

PROCÉDÉ ET SYSTÈME POUR FOURNIR DE LA DIVERSITÉ DANS LA POLARISATION D'ANTENNES

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
**07.12.2016 Bulletin 2016/49**

(73) Proprietor: **Fundació Centre Tecnologic de Telecomunicacions de Catalunya**
**08860 Castelldefels (ES)**

(72) Inventors:
• **HENAREJOS HERNÁNDEZ, Pol**
**08860 Castelldefels (Barcelona) (ES)**
• **PÉREZ NEIRA, Ana, Isabel**
**08860 Castelldefels (Barcelona) (ES)**

(74) Representative: **Herrero & Asociados, S.L.**
**Cedaceros, 1**
**28014 Madrid (ES)**

(56) References cited:
EP-A1- 1 191 710    WO-A1-2011/056111
US-A1- 2003 008 614    US-A1- 2013 331 039

• **NIZAR ZORBA ET AL: "Dual polarization for MIMO processing in multibeam satellite systems", SIGNAL PROCESSING FOR SPACE COMMUNICATIONS, 2008. SPSC 2008. 10TH INTERNATIONAL WORKSHOP ON, IEEE, PISCATAWAY, NJ, USA, 6 October 2008 (2008-10-06), pages 1-7, XP031365867, ISBN: 978-1-4244-2572-3 cited in the application**

**EP 3 100 371 B1**

**Description**

**Field of the invention**

The present invention has its application within the telecommunication sector, and especially, relates to a system and method for providing spatial diversity.

**Background of the invention**

Multiple-Input Multiple-Output (MIMO) schemes were introduced as a promising way to increase notably the spectral efficiency using multiples antennas at transmission and/or reception.

Among the different existing approaches (spatial diversity, beamforming or spatial multiplexing), Vertical Bell Laboratories Layered Space-Time (V-BLAST) scheme and successive improvements presented a simple way to double the rate with a relative increase of the complexity. However, V-BLAST introduced more interference between the streams because all the signals are transmitted through all antennas without any interference pre-cancellation. Thus, the signals shall be transmitted with a higher amplitude to guarantee the same values of Quality of Service (QoS).

In contrast to V-BLAST, Spatial modulation (SM) appeared recently to increase the spectral efficiency, but maintaining the same power levels of single antenna transmissions. In SM, the bits of information are split in some blocks of information which are coded as antenna indices. The rest of bits are transmitted through those antennas that are selected previously by those split bits. Hence, the receiver can estimate the antenna indices and therefore decode those indices to bits. It is known that the basic operational principle of Spatial Modulation offers a single Radio Frequency (RF) chain implementation which results into increased Energy Efficiency. However, this SM approach, is very sensitive to the channel variations and requires accurate channel estimation.

In satellite communications, the long distance prevents this approach to be applied because the channel may be correlated and the elevation angle for each antenna is practically the same from the Earth. Hence, the sensitivity of the terminal is not enough to distinguish the spatial path and detect the antenna index. Because of this, spatial modulation seems not suitable as it does not provide sufficient diversity. In fact, one of the major drawbacks in mobile satellite communications is that the power budget is often restrictive, making unaffordable to improve the spectral efficiency without more power expenses.

On the other hand, dual polarized antennas traditionally used for broadcasting, where subscribers only tuned a single polarization, have also been applied in MIMO scenarios since the recent studies unveil that dual-polarized MIMO is richer in terms of diversity ("Statistical Modeling of Dual-Polarized MIMO Land Mobile Satellite Channels", by A. I. Perez-Neira et al., IEEE Transactions on Communications, Vol. 58, N0. 11, pages 3077-3083, 2010).

Additionally, the use of dual polarized antennas is increasing by the fact that new possibilities are arising and the newest standards include dual polarized MIMO, such as Digital Video Broadcasting - Next Generation Handheld (DVB-NGH). Regarding the use of dual polarized antennas, but in other satellite communication scenarios where there is no the severe throughput restrictions required by video streaming and other transmissions, US5822429 discloses a system for preventing reception and recognition of global positioning satellite (GPS) signals from unauthorized receivers. This GPS (selective denial) system comprises a jamming unit for propagating jamming waveforms and at least one receiver unit for receiving GPS signals as well as the propagated jamming waveforms. The jamming unit comprises a transmit antenna unit for propagating a jamming waveform at two distinct polarization states, and a transmit control switching unit for controlling the sequence of the two propagated polarization states in accordance with an encryption scheme. The receiver unit(s) include(s) a receive antenna unit and a jamming waveform suppression unit for suppressing each polarized state of the received jamming waveforms. The jamming signals, in their simplest form, employ a bi-polarization keying (BPK) defined as synchronously switching and radiating between two (or more) polarization states at a near 100-percent denial duty-cycle. An encoded switching modulation waveform controls switching between the polarization states by using a pseudo-noise encryption technique which allows asynchronous reception, decoding and synchronization for authorized users inputting to the GPS receiver.

Finally, many project conclusions report that the throughput can be increased as in a conventional MIMO system but without expenses of adding more antennas, and the consequent RF chains ("Dual polarization for {MIMO} processing in multibeam satellite systems" by A. I. Perez-Neira et al., 10th International Workshop on Signal Processing for Space Communications, 2008). One of the major benefits is the low cross channel interference due to mutual couplings between radiofrequency (RF) components. However, even though the channels are quasi perfectly independent, there is still a field to investigate in order to mitigate the interferences.

The first attempt is to extend the V-BLAST scheme to dual polarized schemes. Nevertheless, as recent projects unveil, this attempt requires higher power contributions to maintain the same QoS on point-to-point clients.

Another existing solution worthy of mention is "SINGLE ANTENNA SPACIAL DIVERSITY" by Shuang Zhao et al., 5th International Conference on Wireless Communications, Networking and Mobile Computing, 2009. This approach uses Spatial Diversity in a single antenna but the antenna is moved in the space around a geographical area. Therefore, the Spatial Diversity achieved in this system depends upon the speed with which the antenna is moved. Hence, the solution only applies to static or quasi-static rich scattering environments but cannot be translated to mobile scenarios due to several reasons. A first reason is that an antenna requiring to be moved by a motorized device with displacement guide means cannot be integrated in a mobile device of satellite communications. Another reason is that the approach by Shuang Zhao et al. is only a transmission unit but has nothing to do with a complete communication system that includes at least a receiving unit. Therefore, there is a need in the state of the art for a system and method that ensures an increase of the overall performance in terms of throughput in satellite transmissions, the more challenging mobile case included, while guaranteeing a required minimum of QoS (Quality of Service) and needing a minimum increase in power usage.

## Summary of the invention

The present invention solves the aforementioned problems by disclosing a method and system that applies Spatial Modulation (SM) to dual polarized communications in (mobile and fixed) satellite channels. The proposed solution is here entitled Polarized Modulation (PM) and exploits the SM concept but applied for the polarization instead of antennas, providing spatial diversity using a single one double-polarized antenna (i.e., in the context of this invention, spatial diversity is not the same as antenna diversity but equal to diversity in polarization).

The present invention achieves a relevant increase of throughput in satellite communications using low complex solutions which can involve hard and soft detections of the received signal. The present invention only requires 0.4 dB of additional power in order to guarantee the same QoS if compared with the case where single polarization is used. Also, the present invention can be applied and validated for the ETSI's satellite related standards.

According to a first aspect of the present invention, a method for providing diversity in polarization of antennas is disclosed and comprises the following steps:

- transmitting a symbol s, which contains b bits and an additional bit c, using a first polarization or a second polarization of a single one transmitting antenna which is double polarized, whose polarization is determined by the additional bit c;
- receiving a signal $y$ by a single one receiving antenna which is also double polarized and, at the receiving end, estimating the additional bit c to determine whether the first polarization or the second polarization is used to obtain the b+1 bits of information with which the symbol s is recovered.

Another aspect of the present invention relates to a receiver for providing diversity in polarization of antennas, comprising:

- a single one receiving antenna which is double polarized for receiving a signal $y$ to obtain b bits of information and an additional bit c from a transmitted symbol s,
- an estimator block for estimating the additional bit c to determine whether the first polarization or the second polarization is used to obtain the b+1 bits of information.

Another aspect of the present invention relates to transmitter for providing diversity in polarization of antennas, comprising a single one transmitting antenna which is double polarized for transmitting a symbol s containing b+1 bits of information to be recovered by the above defined receiver.

Another aspect of the present invention is referred to a system, which is integrated in a telecommunications network, e.g., a satellite communications network, for providing diversity in polarization of antennas. The system comprises a transmiter and receiver, as described before:

- the transmitter comprises a single one transmitting antenna which is double polarized for transmitting the symbol s, the symbol s containing the b bits plus an additional bit c and being transmitted using a first polarization or a second polarization of the transmitting antenna depending on the additional bit c;
- the receiver comprises a single one receiving antenna which is double polarized for receiving the signal $y$ and further comprises the estimator block for estimating the additional bit c to determine whether the first polarization or the second polarization is used to obtain the b+1 bits of information.

In a last aspect of the present invention, a computer program is disclosed which comprises computer program code means adapted to perform the steps of the described method when said program is run on a computer, a digital signal processor (DSP), a field-programmable gate array (FPGA), an application-specific integrated circuit (ASIC), a micro-processor, a micro-controller, or any other form of programmable hardware.

The method and system in accordance with the above described aspects of the invention have a number of advantages with respect to prior art, summarized as follows:

- The present invention achieves an improvement in throughput of up to 100% with an increase of less than 1dB at low EbN0 regime using a double polarized antenna in the transmitter and in the receiver. Although some existing prior-art systems, such as the VBLAST or Alamouti's codes, also use polarized antennas, they always provide marginal gains and often need an increase of the power budget.
- The present invention is computationally low complex and does not imply any hardware modifications with respect to the existing dual polarized systems. Hence, it can be used in current deployments where dual polarized transmissions are used. Thanks to the signal processing formulation of the proposed PM solution, it is possible to enhance the throughput with a small increment of the EbN0. As an example, using the VBLAST case, although an increment of 100% can be fulfilled, an increment of more than 3 dB is needed of power radiation.
- Regarding US5822429, none of the application scenarios and the modulation used are the same as the ones applied in the present invention. The system described in US5822429 uses BPK modulation, while the present invention applies the proposed polarized modulation (PM) which can be compared with traditional modulations (BPSK or QPSK) of mobile satellite communications scenarios. US5822429 relates to GPS jamming scenarios and the goal is to inhibit received jamming signals. On the contrary, the purpose of the present invention is to increase the throughput in satellite communications. Both the present invention and the system disclosed in US5822429 refer to switching between polarization states, but US5822429 teaches a random switching between polarization states, unlike the proposed PM of the present invention which switches between the two polarization states in a deterministic way as described before.
- Regarding the teachings by Shuang Zhao et al. in "SINGLE ANTENNA SPACIAL DIVERSITY", this approach is just only for (quasi-)static scattering scenarios and the antenna needs to be moved around a geographical area. By contrast, the present invention uses a single antenna at a fixed location point and deals not only with fixed communications but also with mobile scenarios where the transmission conditions suffer from fast changes.

These and other advantages will be apparent in the light of the detailed description of the invention.

**Description of the drawings**

For the purpose of aiding the understanding of the characteristics of the invention, according to a preferred practical embodiment thereof and in order to complement this description, the following figures are attached as an integral part thereof, having an illustrative and non-limiting character:

Figure 1 shows a block diagram of a transmitter system for providing diversity in polarization of antennas according to a preferred embodiment of the invention.

Figure 2 shows a block diagram of a receiver side in a system for providing diversity in polarization of antennas according to a preferred embodiment of the invention.

Figure 3 shows a graphical representation of throughput versus energy per bit to noise power spectral density ratio, according to possible embodiments of the invention and compared with prior art approaches.

Figure 4 shows a graphical representation of bit error rate versus energy per bit to noise power spectral density ratio, according to possible embodiments of the invention and compared with prior art approaches.

**Preferred embodiment of the invention**

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

In the context of the invention, the following concepts are used:

Bit error rate (BER) is the number of bit errors divided by the total number of transferred bits during a studied time interval

Eb/N0 is the energy per bit to noise power spectral density ratio

BLock Error Rate (BLER) = Number of erroneous blocks / Total number of
Received Blocks

Throughput (T) is defined as T = R(1-BLER)

which is equivalent to the symbol rate (R) of a particular radio bearer weighted by the probability of non-error in the whole block.

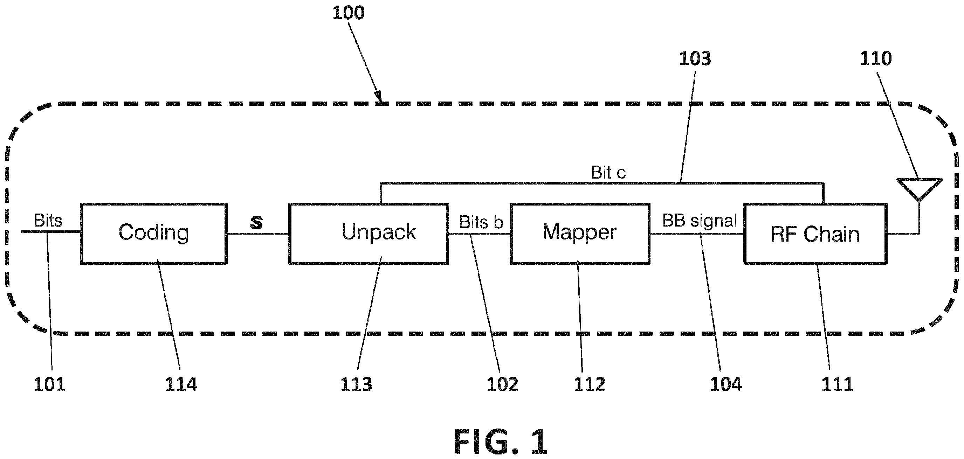

It is within this context, that various embodiments of the invention are now presented with reference to the FIGs. 1-4.

Figure 1 presents the architecture building blocks of a transmitter (100) performing the proposed Polarized Modulation. The transmitter (100) is part of a system for providing diversity in polarization of antennas, in which each symbol to be transmitted contains $b + 1$ bits of information (101), where $b$ bits (102) are modulated with a constellation $S$ and the remaining additonal bit (103), denoted as bit $c$, is used for polarization selection. Any kind of digital modulation as in traditional schemes can be applied to the $b$ bits (102). The modulated symbol to be transmitted is denoted as $s$ in the equations below. Depending on the value of bit $c$, the symbol s is transmitted using one polarization or the other. The transmitter (100) has a single transmitting antenna (110) which is double polarized and attached to a single RF chain (111), through which the -BB- baseband signal (104) is injected in the two polarized waveforms. The Mapper (112) block performs all stages to produce the waveform, e.g., using QPSK symbols. The Unpack block (113) makes groups of $b + 1$ bits and extracts from each group just one bit, e.g., the first bit, which is the bit c used by the RF chain (111) to control the polarization of the transmitting antenna (110). The bits of information (101) are input to a coding block (114) of the transmitter (100) and the coding block (114) generates the modulated symbols s using the constellation $S$, e.g., BPSK, QPSK, etc. In fact,

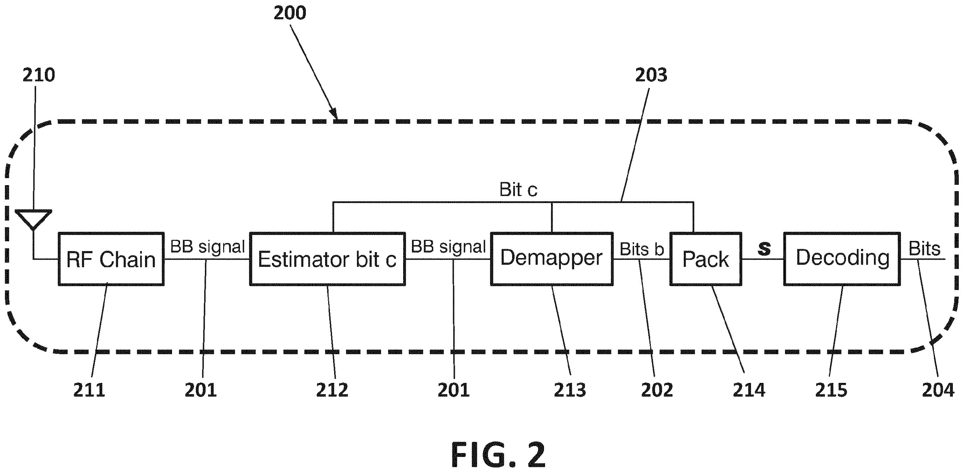

Figure 2 presents the architecture building blocks of a receiver (200) forming part of the system for providing diversity in polarization of antennas, in accordance with an embodiment of the invention. The receiver (200) has a single receiving antenna (210) with dual polarization. Thus, a system with double polarized antennas at both sides is considered. Also, a flat communication channel between the transmitter (100) and receiver (200) of the system is assumed. A baseband signal (201) is extracted at the receiving side from a single RF chain (211) attached to the receiving antenna (210). The baseband signal (201) passes through an estimator block (212) which extracts the bit c according to a demodulation schema. Three demodulation schemes are described below, based on channel matching, on likelihood ratio with hard decision and on likelihood ratio with soft decision respectively. The receiver (200) further comprises a demapper (213) block which recovers the bits $b$ taking as an input the bit $c$ estimated by the estimator block (212) using one of the three proposed schemes. The receiver (200) includes a packing block (214) for taking all the b+1 bits, bits $b$ from the demapper (213) and the estimated bit $c$, in order to join them all to a single stream $s$ which is finally decoded by a decoding block or decoder (215) to obtain the bits of information (204). The decoder (215) uses a modulation scheme in correspondence with the one used by the coding block (114) included in the transmitter (100, e.g., BPSK, QPSK, 8PSK, 16QAM, 64QAM, 256QAM...

The proposed system is based on dual polarized antennas providing spatial diversity at transmission using a single antenna and can increase the throughput by a factor of $1 + 1/b$ in low EbN0 regimes.

In a preferred embodiment of the proposed system for satellite communications, the data payload at the transmitter (100) can be constructed on ground as two streams (one for each polarization) in such way that the zeroed symbols are interleaved, i.e. when the first stream contains a symbol, the second contains a zero and vice versa. Thus, the satellite can increase the throughput but maintaining the legacy and compatibility with previous standards.

Regarding the reception side, the receiver (200) can use a single RF chain (211) and the only requirement is the capability to switch among the polarizations faster than the symbol rate R. Hence, using that solutions and the different proposed approaches for coding describe below, the terminal may receive the additional bit $c$ preserving the same chain.

As explained before, depending upon the value of bit $c$, the symbol $s$ is transmitted using one polarization or the other applied to the transmitting antenna (110). Hence, for a time instant, the system model of Polarized Modulation (PM) can be formulated as follows:

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1 - c \\ c \end{pmatrix} s + \begin{pmatrix} w_1 \\ w_2 \end{pmatrix} \qquad \text{(equation 1)}$$

The co-channels across the two polarizations of the transmitting antenna (110) are denoted as $h_{11}$ and $h_{22}$

respectively, and the cross-channels across both polarizations are denoted as $h_{21}$ and $h_{12}$ respectively. The received signals of each polarization in the receiving antenna (210) are denoted as $y_1$ and $y_2$, respectively, and $w_i$ is the Additive White Gaussian Noise (AWGN) contribution of the $i$th polarization, $i$ = 1,2.

In a more compact way, equation 1 can be written as:

$$\mathbf{y} = \mathbf{H}c s + \mathbf{w}. \qquad \text{(equation 2)}$$

Since this scheme adds an additional bit $c$ to the transmission while keeping the same power budget, the spectral efficiency $G$ of the system is:

$$G = \frac{b+1}{b} = 1 + \frac{1}{b}. \qquad \text{(equation 3)}$$

For higher order modulations, the value of equation 3 is asymptotically equal to 1 and thus, the proposed PM system offers high gains mainly for lower order modulations. For instance, the gain G = 2 for BPSK or G = 1.5 for QPSK modulations. As the lower order modulations are used in low signal to noise (SNR) regime, it is clear that PM increases significantly the spectral efficiency in low SNR systems. This is exactly the scenario for mobile satellite communications which is extremely power limited. It is worth to mention that in this proposed model, firstly, the additional bit $c$ is determined by the estimator block (212) so that, once bit $c$ is estimated, the receiver (200) can take the received signal of the estimated polarization index and process it as a Single-input Single-output (SISO) case.

In order to decode the information at the receiver (200), three different approaches are proposed here, which achieve different results at expenses of complexity increase.

FIRST APPROACH: CHANNEL MATCHING

The first approach is to apply a matched filter to the baseband signal (201) translated from the received signal in the receiving antenna (210). The channel coefficients are assumed to be uncorrelated, i.e., $h_i^* h_j = 0,$ $\forall i \neq j$. Hence, the matched signal r is obtained as follows:

$$\mathbf{r} = \mathbf{H}^H \mathbf{y} = \begin{pmatrix} |h_{11}|^2 + |h_{21}|^2 & 0 \\ 0 & |h_{22}|^2 + |h_{12}|^2 \end{pmatrix} c s + \mathbf{w}. \qquad \text{(equation 4)}$$

Focussing on the individual matched signals, $r_1$ and $r_2$, at each polarization, they can be obtained following the criteria of equation 5 below:

$$r_1 = \left(|h_{11}|^2 + |h_{21}|^2\right)(1 - c)s + w_1 \qquad r_2 = \left(|h_{22}|^2 + |h_{12}|^2\right)c s + w_2 \qquad \text{(equation 5)}$$

In the case where the signal is being transmitted through the first polarization, i.e., $c$ = 0, the first matched signal $r_1$ contains the signal plus noise and the second matched signal $r_2$ only receives the noise. For the reciprocal case, through the second polarization, i.e., $c$ = 1, the first matched signal $r_1$ contains only the noise and the second matched signal $r_2$ conveys the signal plus the noise. The noise is not only the thermal noise but also considers the cross-polar interferences. Therefore, the decision rule to determine bit $c$ by the estimator block (212) is denoted as:

$$\hat{c} = \arg \max_i \left(|r_i|^2\right) - 1 \qquad \text{(equation 6)}$$

Thus, after the decision of estimated bit $\hat{c}$, the receiver (200) is able to decode the symbol $s$ by the decoding block (215) based on the matched signal $r_{\hat{c}+1}$.

However, this first approach based on channel matching is very sensitive to the accuracy of the estimation of the matched signal $r_{\hat{c}+1}$. If an error occurs, the detection of symbol $s$ fails and the remaining $b$ bits cannot be decoded since the receiver (200) takes the matched signal $r_{\hat{c}+1}$ as it only would contain noise.

SECOND APPROACH: LIKELIHOOD RATIO WITH HARD DECISION

As mentioned before, the matched filter approach is very sensitive to channel and cross-polar coupling impairments. Furthermore, the assumption about channel's coefficients uncorrelation is not always plausible. In practice, this assumption is quite strong and may not be fulfilled. Because of that, another second embodiment of the invention to obtain the likelihood ratio of transmitting with the first polarization ($c = 0$) or with the second polarization ($c = 1$) is proposed when the uncorrelation assumption is not further required. That is equivalent to propose a likelihood ratio $\Lambda(\mathbf{y})$ of transmitting with any of the two possible polarizations at the transmitting antenna (110):

$$\Lambda(\mathbf{y}) = \frac{P(c=1|\mathbf{y})}{P(c=0|\mathbf{y})} = \frac{\sum_{\tilde{s}\epsilon S} P(\mathbf{y}|c=1,s=\tilde{s})P(c=1)}{\sum_{\tilde{s}\epsilon S} P(\mathbf{y}|c=0,s=\tilde{s})P(c=0)}. \qquad \text{(equation 7)}$$

Assuming all bits are uncorrelated and equally probable, equation 7 can be rewritten as follows:

$$\Lambda(\mathbf{y}) = \frac{\sum_{\tilde{s}\epsilon S} \exp\left(-\frac{\|\mathbf{z}_2\|^2}{\sigma_{\tilde{w}_2}^2}\right)}{\sum_{\tilde{s}\epsilon S} \exp\left(-\frac{\|\mathbf{z}_1\|^2}{\sigma_{\tilde{w}_1}^2}\right)} \qquad \text{(equation 8)}$$

where $\mathbf{z}_i$ $i \in \{1,2\}$ are defined as the received signal vectors in the case that the symbols s are transmitted through the first polarization ($i=1$) or the second polarization ($i=2$) respectively. Hence, the received signal vectors $\mathbf{z}_{i\in\{1,2\}}$ take this form:

$$\mathbf{z}_1 = \begin{pmatrix} h_{11}s + w_1 \\ h_{21}s + w_2 \end{pmatrix}$$

$$\mathbf{z}_2 = \begin{pmatrix} h_{12}s + w_1 \\ h_{22}s + w_2 \end{pmatrix}. \qquad \text{(equation 9)}$$

This form is equivalent to write the equation 1 defining the system model as follows:

$$\mathbf{y} = \mathbf{h}_{c+1}s + \mathbf{w} \qquad \text{(equation 10)}$$

where $h_i$ is the $i$th column of channel matrix **H**.
This second approach reveals that the polarization modulation switches between the polarization's channels in an opportunistic way. Thus, the likelihood ratio $\Lambda(\mathbf{y})$ is calculated as:

$$\Lambda(\mathbf{y}) = \frac{\sum_{\tilde{s}\epsilon S} \exp\left(-\frac{\|\mathbf{y}-\mathbf{h}_2\tilde{s}\|^2}{\sigma_{\tilde{w}_2}^2}\right)}{\sum_{\tilde{s}\epsilon S} \exp\left(-\frac{\|y-\mathbf{h}_1\tilde{s}\|^2}{\sigma_{\tilde{w}_1}^2}\right)}. \qquad \text{(equation 11)}$$

being a first channel vector $\mathbf{h_1} = (h_{11}, h_{21})$
being a second channel vector $\mathbf{h_2} = (h_{12}, h_{22})$
$\sigma_{\omega 1}$ is noise variance of the noise contribution of the first polarization $w_1$
$\sigma_{\omega 2}$ is noise variance of the noise contribution of the second polarization $w_2$
$\tilde{S}$ is a summation index of the symbols s contained in the constellation $S$

In the case that likelihood ratio $\Lambda(\mathbf{y})$ is greater than 1, it means that is more probably that the additional bit $c = 1$ and vice versa. Hence, the estimation of bit $c$ performed by the estimator block (212) can be stated as:

$$\hat{c} = \frac{1+\text{sign}\left(\log(\Lambda(\mathbf{y}))\right)}{2}. \qquad \text{(equation 12)}$$

Once the receiver (200) obtains the estimation of bit c from the estimator block (212), it knows which polarization is being used and thus it can recover the symbol *s* using the received signal $y_{c+1}^{\wedge}$.

THIRD APPROACH: LIKELIHOOD RATIO WITH SOFT DECISION

The two approaches described above perform hard decision for the estimation of bit *c*. However, they can introduce errors if the system conveys coded information. Hence, it is imperative to obtain soft information or soft bits at the output of the demapper (213). The idea is to use the likelihood ratio $\Lambda(\mathbf{y})$ to weight the signals received in both polarizations. Therefore, the receiver (200) is able to extract information from both polarizations weighting them by each probability. Equation 7 can be rewritten:

$$P_2 = P(c = 1|\mathbf{y}) = \frac{\Lambda(\mathbf{y})}{1+\Lambda(\mathbf{y})}. \qquad \text{(equation 13)}$$

Therefore, the receiver (200) can recover the signal by weighting the received signals from both polarizations by a probability $1 - P_2$ and $P_2$, respectively. If we assume that the bit c is transmitted with equal probability, the combined received signal r takes the following form:

$$r = (1 - P_2)y_1 + P_2 y_2 = \frac{y_1 + y_2\Lambda(\mathbf{y})}{1+\Lambda(\mathbf{y})} \qquad \text{(equation 14)}$$

At this point, the receiver (200) is able to decode the signal r from equation 14 as usually and obtain the remaining *b* bits. Furthermore, the estimation of bit *c* performed by the estimator block (212) can be taken from equation 12 but without the sign() operator, as follows:

$$\hat{c} = \frac{1+\log(\Lambda(\mathbf{y}))}{2}. \qquad \text{(equation 15)}$$

As follows, the proposed three schemes are analysed and compared among them and with systems existing in prior art.

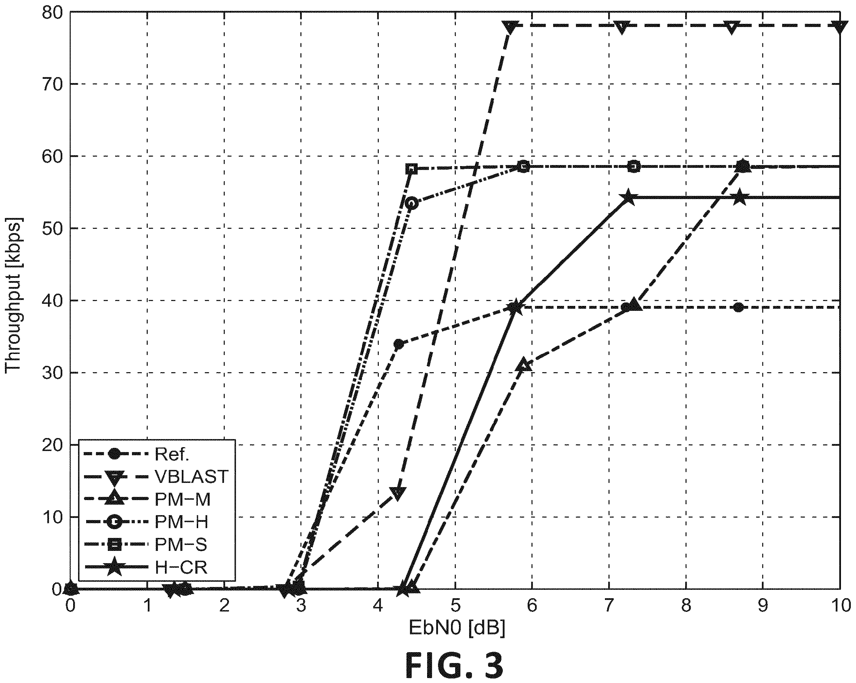

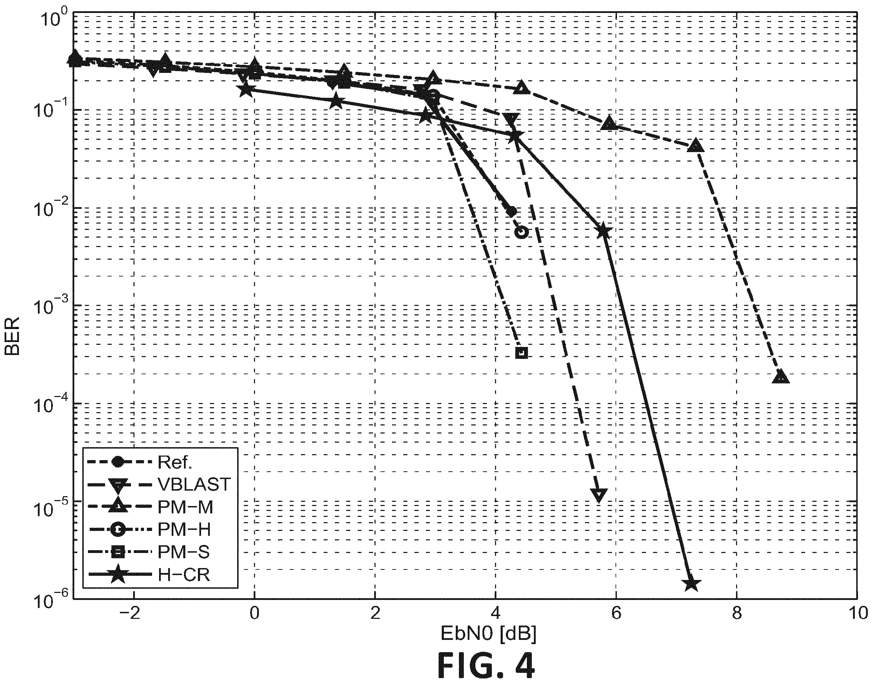

Figures 3 and 4 show the results of the analysis. In both FIGs 3-4, the three presented approaches are considered: PM-M is the first approach based on channel matching; PM-H is the second approach based on likelihood ratio with hard decision and PM-S is the third approach described based on likelihood ratio with soft decision. They are also compared with an scenario H-CR which uses a higher coding rate, a reference scenario denoted as Ref. which refers to the scenario where single polarization is used; and a last scenario using Vertical Bell Laboratories Layered Space-Time (VBLAST) coding scheme aforementioned as prior art.

For the analysis, the downlink of the Next Generation Satellite Communications standard, currently being discussed at ETSI committee, was deployed. This standard defines the scrambling, turbo coding and mapping stages. In order to offer flexibility in terms of data rate, several bearers and sub-bearers are also detailed. They are different profiles with many combinations of coding rate and constellations. The sampling frequency is 33600 symbols/second and the frame length is 80 ms, where the blocks of coded symbols are not interleaved. Thanks to that, it is possible to reduce the delay and offer voice traffic data in both directions. In order to simplify the model, QPSK bearers are used for the analysis of the proposed PM approaches. An L-band geostationary satellite transponder with many beams and dual polarization has been simulated. Since the beams are not perfectly orthogonal, the adjacent beams have been assumed to be at the same frequency sub-band as interferences, as well as the cross polarization couplings. The results have been compared among the different parameters of adjacent beams.

Therefore, the following results have been validated using a framework developed for interactive mobile satellites, as the scenario specified by the newest version of ETSI TS 102 744 standard "Satellite component of UMTS (S-UMTS) and the Broadband Global Area Network system (BGAN) which aims to provide interactive mobile satellite communications.

Table 1 shows the values of the data coupling polarization matrix and the interference matrices which have been used for the analysis.

## Table 1

| | Index | Interference matrix (dB) |
|---|---|---|
| Data | 0 | $\begin{pmatrix} 40.8 & -11.6 \\ -11.6 & 40.8 \end{pmatrix}$ |
| rf er | 1 | $\begin{pmatrix} 3.7 & -12.3 \\ -12.3 & 3.7 \end{pmatrix}$ |

| | 2 | $\begin{pmatrix} 8.7 & -13 \\ -13 & 8.7 \end{pmatrix}$ |
|---|---|---|
| | 3 | $\begin{pmatrix} 3.6 & -6.7 \\ -6.7 & 3.6 \end{pmatrix}$ |
| | 4 | $\begin{pmatrix} 13.4 & -.89 \\ -8.9 & 13.4 \end{pmatrix}$ |
| | 5 | $\begin{pmatrix} 8.9 & -4.7 \\ -4.7 & 8.9 \end{pmatrix}$ |
| | 6 | $\begin{pmatrix} 11.6 & -3.7 \\ -3.7 & 11.6 \end{pmatrix}$ |

These values are obtained via realistic multibeam antenna pattern. A Rician channel model with a single tap, a Doppler shift of 2Hz and correlation between polarization streams in transmission has been used. The path loss $L$ corresponding to the height of satellite defines a magnitude of $L$ = -187.05 dB and the signal bandwidth $B$ defined in the standard is $B$ = 200 KHz. The merit figure gain to noise temperature ($G/T$) is $G/T$ = -12.5 dBi and the power used is such that the carrier to noise ($C/N$) varies from -1 dB to 20 dB.

Also perfect channel estimation and perfect synchronization at the receiver side is assumed. Prior to detection of symbol $s$, one of the three approaches (PM-M, PM-H, PM-S) are performed in order to estimate the bit $c$ and equalize the received signal $y^{\wedge}_{c+1}$. The receiver implements a Minimum Mean Square Error-MMSE- equalizer to mitigate the interferences from the other beams as well as the other polarization. After the received signal $y^{\wedge}_{c+1}$ is equalized, it is passed to the turbo decoder and scrambler to obtain the payload in bit units.

. During the evaluation, using QPSK, the results showed that only an increment of ~0.4 dB was needed to achieve a gain of 50% of spectral efficiency. Three proposed schemes PM-M, PM-H and PM-S are compared also with polarization multiplexing, noted as V-BLAST, and increasing the code rate H-CR. Both prior art schemes, V-BLAST and H-CR, increase the throughput a rate by 2 and 1.4 respectively.

Figure 3 shows that the PM approach presented here is the one that consumes less power in order to increase the throughput by 50%, since further gains cannot be achieved because the modulation used was QPSK. More particularly, regarding the three embodiment described before: PM-S is the technique that achieves highest throughput with less EbN0, followed by PM-H. With less than 0.4dB extra, the proposed PM technique can increase the efficiency by 50% if compared with the reference scenario (Ref.) of single polarization. Additionally, if comparing PM with VBLAST, indeed the throughput can be doubled but it requires almost 2dB of additional EbN0. Moreover, if the reference scenario is used but with a higher coding rate, H-CR scenario, additional 3dB of EbN0 were needed to achieve almost the same rate.

Figure 4 compares the bit error rate (BER) for the same techniques as with the previous Figure 3. For a fixed BER, the technique that results in less EbN0 ratio is PM-S, followed by PM-H and the Ref. scenario. It is worth to mention that the poor performance of PM-M is due to the used channel model introduces correlation among the coefficients. Hence, the matched matrix degenerates in to non-diagonal matrix and the assumption is not fulfilled.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1.  A method for providing diversity in polarization of antennas, comprising:

    - transmitting a symbol s which contains b+1 bits of information by a transmitter (100),

- receiving a signal *y* by a receiver (200) which obtains the b+1 bits of information from the received signal *y*,

**characterized in that:**

- transmitting the symbol s uses a single one transmitting antenna (110) which is double polarized and the symbol s, containing the b bits plus an additional bit c, is transmitted using a first polarization or a second polarization of the transmitting antenna (110) depending on the additional bit c;
- receiving the signal *y* uses a single one receiving antenna (210) which is double polarized and further comprises estimating the additional bit c to determine whether the first polarization or the second polarization is used to obtain the b+1 bits of information.

2. The method according to claim 1, wherein receiving the signal *y* comprises receiving by the single one receiving antenna (210) a signal of the first polarization $y_1$ and a signal of the second polarization $y_2$, being

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1-c \\ c \end{pmatrix} s + \begin{pmatrix} w_1 \\ w_2 \end{pmatrix}$$

where

$h_{11}$ is a co-channel signal across the first polarization of the transmitting antenna (110),
$h_{22}$ is a co-channel signal across the second polarization of the transmitting antenna (110),
$h_{21}$ is a cross-channel signal across the first polarization of the transmitting antenna (110),
$h_{12}$ is a cross-channel signal across the second polarization of the transmitting antenna (110),
$w_1$ is a noise contribution of the first polarization and $w_2$ is a noise contribution of the second polarization,
and the received signal *y* is composed of the signal of the first polarization $y_1$ and the signal of the second polarization $y_2$.

3. The method according to claim 2, wherein the b+1 bits of information are obtained by the receiver (200) from a signal $r_{c+1}^{\wedge}$ selected from the signal of the first polarization $y_1$ and the signal of the second polarization $y_2$ which is determined by an estimated bit $\hat{c}$, the estimated bit $\hat{c}$ obtained by estimating the additional bit c as follows:

$$\hat{c} = \arg\max_i\left(|r_i|^2\right) - 1.$$

where i = 1, 2;
$r_1$ is a first matched signal from a matched filter of the receiver (200),
$r_2$ is a second matched
signal from the matched filter of the receiver (200),
and if the first matched signal $r_1$ is only noise, the selected signal $r_{c+1}^{\wedge}$ is the second matched signal $r_2$;
and if the second matched signal $r_2$ is only noise, the selected signal $r_{c+1}^{\wedge}$ is the first matched signal $r_1$.

4. The method according to claim 2, wherein the b+1 bits of information are obtained by the receiver (200) using a signal $y_{c+1}^{\wedge}$ selected from the signal of the first polarization $y_1$ and the signal of the second polarization $y_2$ which is determined by an estimated bit $\hat{c}$, the estimated bit $\hat{c}$ obtained by estimating the additional bit c as follows:

$$\hat{c} = \frac{1 + \text{sign}\left(\log(\Lambda(\mathbf{y}))\right)}{2}.$$

where $\Lambda(\mathbf{y})$ is a likelihood ratio of transmitting with any of the first polarization and the second polarization of the transmitting antenna (110),
and the selected signal $y_{c+1}^{\wedge}$ is the signal of the second polarization $y_2$, if the likelihood ratio $\Lambda(\mathbf{y})$ is $\Lambda(\mathbf{y}) > 1$;
and otherwise, the selected signal $y_{c+1}^{\wedge}$ is the signal of the first polarization $y_1$.

5. The method according to claim 2, wherein the b+1 bits of information are obtained by the receiver (200) from a combined received signal $y_{c+1}^{\wedge}$ using the signal of the first polarization $y_1$ and the signal of the second polarization

$y_2$ which is determined by an estimated bit $\hat{c}$, the estimated bit $\hat{c}$ obtained by estimating the additional bit c as follows:

$$\hat{c} = \frac{1 + \log(\Lambda(\mathbf{y}))}{2}.$$

where $\Lambda(\mathbf{y})$ is a likelihood ratio of transmitting with any of the first polarization and the second polarization of the transmitting antenna (110),
and the combined received signal $y_{\hat{c}+1}$ is calculated as:

$$y_{\hat{c}+1} \; r = (1 - P_2)y_1 + P_2 y_2 = \frac{y_1 + y_2 \Lambda(\mathbf{y})}{1 + \Lambda(\mathbf{y})}$$

6. The method according to any of claims 4-5, wherein the likelihood ratio $\Lambda(\mathbf{y})$ is calculated as:

$$\Lambda(\mathbf{y}) = \frac{\sum_{\breve{s} \epsilon \mathcal{S}} \exp\left(-\frac{\|\mathbf{y} - \mathbf{h}_2 \breve{s}\|^2}{\sigma_{w_2}^2}\right)}{\sum_{\breve{s} \epsilon \mathcal{S}} \exp\left(-\frac{\|\mathbf{y} - \mathbf{h}_1 \breve{s}\|^2}{\sigma_{w_1}^2}\right)}.$$

where

$\mathbf{h}_1$ denotes a first channel vector of coordinates $(h_{11}, h_{21})$, $h_{11}$ being the co-channel signal across the first polarization of the transmitting antenna (110) and $h_{21}$ being the cross-channel signal across the first polarization of the transmitting antenna (110);
$\mathbf{h}_2$ denotes a second channel vector of coordinates $(h_{12}, h_{22})$, $h_{12}$ being the co-channel signal across the second polarization of the transmitting antenna (110) and $h_{22}$ is the cross-channel signal across the second polarization of the transmitting antenna (110);
$\sigma_{\omega 1}$ is noise variance of the noise contribution of the first polarization $w_1$, $\sigma_{\omega 2}$ is noise variance of the noise contribution of the second polarization $w_2$; and $S$ is a constellation of symbols s.

7. A system for providing diversity in polarization of antennas, comprising:

- a transmitter (100) for transmitting a symbol s which contains b+1 bits of information,
- a receiver (200) for receiving a signal $y$ which obtains the b+1 bits of information from the received signal $y$,

**characterized in that:**

- the transmitter (100) comprises a single one transmitting antenna (110) which is double polarized for transmitting the symbol s, the symbol s containing the b bits plus an additional bit c and being transmitted using a first polarization or a second polarization of the transmitting antenna (110) depending on the additional bit c;
- the receiver (200) comprises a single one receiving antenna (210) which is double polarized for receiving the signal $y$ and further comprises an estimator block (212) for estimating the additional bit c to determine whether the first polarization or the second polarization is used to obtain the b+1 bits of information.

8. The system according to claim 7, wherein the single one receiving antenna (210) is configured for receiving a signal of the first polarization $y_1$ and a signal of the second polarization $y_2$, being

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1 - c \\ c \end{pmatrix} s + \begin{pmatrix} w_1 \\ w_2 \end{pmatrix}$$

where

$h_{11}$ is a co-channel signal across the first polarization of the transmitting antenna (110),
$h_{22}$ is a co-channel signal across the second polarization of the transmitting antenna (110),

$h_{21}$ is a cross-channel signal across the first polarization of the transmitting antenna (110),

$h_{12}$ is a cross-channel signal across the second polarization of the transmitting antenna (110),

$w_1$ is a noise contribution of the first polarization and $w_2$ is a noise contribution of the second polarization,

and the single one receiving antenna (210) receives the signal $y$ composed of the signal of the first polarization $y_1$ and the signal of the second polarization $y_2$.

9. The system according to claim 8, wherein the receiver (200) further comprises a decoder (215) for decoding the b+1 bits of information, obtaining the b bits from a signal $r_{c+1}^{\wedge}$ selected from the signal of the first polarization $y_1$ and the signal of the second polarization $y_2$ which is determined by the additional bit c which is an estimated bit $\hat{c}$ obtained by the estimator block (212) as follows:

$$\hat{c} = \arg \max_{i}\left(|r_i|^2\right) - 1.$$

where I = 1, 2;

$r_1$ is a first matched signal from a matched filter of the receiver (200),

$r_2$ is a second matched signal from the matched filter of the receiver (200),

and if the first matched signal $r_1$ is only noise, the selected signal $r_{c+1}^{\wedge}$ is the second matched signal $r_2$;

and if the second matched signal $r_2$ is only noise, the selected signal $r_{c+1}^{\wedge}$ is the first matched signal $r_1$.

10. The system according to claim 8, wherein the receiver (200) further comprises a decoder (215) for decoding the b+1 bits of information, obtaining the b bits from a signal $y_{c+1}^{\wedge}$ selected from the signal of the first polarization $y_1$ and the signal of the second polarization $y_2$ which is determined by the additional bit c which is an estimated bit $\hat{c}$ obtained by the estimator block (212) as follows:

$$\hat{c} = \frac{1 + \operatorname{sign}\left(\log(\Lambda(\mathbf{y}))\right)}{2}.$$

where $\Lambda(\mathbf{y})$ is a likelihood ratio of transmitting with any of the first polarization and the second polarization of the transmitting antenna (110),

and the selected signal $y_{c+1}^{\wedge}$ is the signal of the second polarization $y_2$, if the likelihood ratio $\Lambda(\mathbf{y})$ is $\Lambda(\mathbf{y}) > 1$;

and otherwise, the selected signal $y_{c+1}^{\wedge}$ is the signal of the first polarization $y_1$

11. The system according to claim 8, wherein the receiver (200) further comprises a decoder (215) for decoding the b+1 bits of information, obtaining the b bits from a combined received signal $y_{c+1}^{\wedge}$ using the signal of the first polarization $y_1$ and the signal of the second polarization $y_2$ which is determined by the additional bit c which is an estimated bit $\hat{c}$ obtained by the estimator block (212) as follows:

$$\hat{c} = \frac{1 + \log(\Lambda(\mathbf{y}))}{2}.$$

where $\Lambda(\mathbf{y})$ is a likelihood ratio of transmitting with any of the first polarization and the second polarization of the transmitting antenna (110),

and the combined received signal $y_{c+1}^{\wedge}$ is calculated as:

$$y_{\hat{c}+1}\, r = (1 - P_2)y_1 + P_2 y_2 = \frac{y_1 + y_2 \Lambda(\mathbf{y})}{1 + \Lambda(\mathbf{y})}$$

12. The system according to any of claims 10-11, wherein the receiver (200) calculates the likelihood ratio $\Lambda(\mathbf{y})$ as:

$$\Lambda(\mathbf{y}) = \frac{\Sigma_{\check{s}\epsilon\mathcal{S}} \exp\left(-\frac{\|\mathbf{y}-\mathbf{h}_2\check{s}\|^2}{\sigma_{w_2}^2}\right)}{\Sigma_{\check{s}\epsilon\mathcal{S}} \exp\left(-\frac{\|y-\mathbf{h}_1\check{s}\|^2}{\sigma_{w_1}^2}\right)}.$$

where

$\mathbf{h_1}$ denotes a first channel vector of coordinates $(h_{11}, h_{21})$, $h_{11}$ being the co-channel signal across the first polarization of the transmitting antenna (110) and $h_{21}$ being the cross-channel signal across the first polarization of the transmitting antenna (110);
$\mathbf{h_2}$ denotes a second channel vector of coordinates $(h_{12}, h_{22})$, $h_{12}$ being the co-channel signal across the second polarization of the transmitting antenna (110) and $h_{22}$ is the cross-channel signal across the second polarization of the transmitting antenna (110);
$\sigma_{\omega 1}$ is noise variance of the noise contribution of the first polarization $w_1$, $\sigma_{\omega 2}$ is noise variance of the noise contribution of the second polarization $w_2$;
and $S$ is a constellation of symbols s.

**13.** A receiver (200) for providing diversity in polarization of antennas, **characterized by** comprising:

- a single one receiving antenna (210) which is double polarized for receiving a signal $y$ to obtain b+1 bits of information from a symbol s transmitted by a transmitter (100), the symbol s containing the b bits plus an additional bit c, the symbol s being transmitted using a first polarization or a second polarization of the transmitting antenna (110) depending on the additional bit c,
- an estimator block (212) for estimating the additional bit c to determine whether a first polarization or a second polarization is used to obtain the b+1 bits of information.

**14.** The receiver (200) according to claim 13, wherein the single one receiving antenna (210) is configured for receiving a signal of the first polarization $y_1$ and a signal of the second polarization $y_2$, being

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1-c \\ c \end{pmatrix} s + \begin{pmatrix} w_1 \\ w_2 \end{pmatrix}$$

where

$h_{11}$ is a co-channel signal across the first polarization of the transmitting antenna (110),
$h_{22}$ is a co-channel signal across the second polarization of the transmitting antenna (110),
$h_{21}$ is a cross-channel signal across the first polarization of the transmitting antenna (110),
$h_{12}$ is a cross-channel signal across the second polarization of the transmitting antenna (110),
$w_1$ is a noise contribution of the first polarization and $w_2$ is a noise contribution of the second polarization,
and the single one receiving antenna (210) receives the signal $y$ composed of the signal of the first polarization $y_1$ and the signal of the second polarization $y_2$.

**15.** The receiver (200) according to claim 14, further comprising a decoder (215) for decoding the b+1 bits of information, obtaining the b bits from a signal $r_{\hat{c}+1}$ selected from the signal of the first polarization $y_1$ and the signal of the second polarization $y_2$ which is determined by the additional bit c which is an estimated bit $\hat{c}$ obtained by the estimator block (212) as follows:

$$\hat{c} = \arg\max_i\left(|r_i|^2\right) - 1.$$

where i = 1, 2;
$r_1$ is a first matched signal from a matched filter of the receiver (200),
$r_2$ is a second matched signal from the matched filter of the receiver (200),
and if the first matched signal $r_1$ is only noise, the selected signal $r_{\hat{c}+1}$ is the second matched signal $r_2$;
and if the second matched signal $r_2$ is only noise, the selected signal $r_{\hat{c}+1}$ is the first matched signal $r_1$.

**16.** The receiver (200) according to claim 14, wherein the receiver (200) further comprises a decoder (215) for decoding the b+1 bits of information, obtaining the b bits from a signal $y^{\wedge}_{c+1}$ selected from the signal of the first polarization $y_1$ and the signal of the second polarization $y_2$ which is determined by the additional bit c which is an estimated bit $\hat{c}$ obtained by the estimator block (212) as follows:

$$\hat{c} = \frac{1 + \operatorname{sign}\left(\log(\Lambda(\mathbf{y}))\right)}{2}.$$

where $\Lambda(\mathbf{y})$ is a likelihood ratio of transmitting with any of the first polarization and the second polarization of the transmitting antenna (110),
and the selected signal $y^{\wedge}_{c+1}$ is the signal of the second polarization $y_2$, if the likelihood ratio $\Lambda(\mathbf{y})$ is $\Lambda(\mathbf{y}) > 1$;
and otherwise, the selected signal $y^{\wedge}_{c+1}$ is the signal of the first polarization $y_1$.

**17.** The receiver (200) according to claim 14, wherein the receiver (200) further comprises a decoder (215) for decoding the b+1 bits of information, obtaining the b bits from a combined received signal $y^{\wedge}_{c+1}$ using the signal of the first polarization $y_1$ and the signal of the second polarization $y_2$ which is determined by the additional bit c which is an estimated bit $\hat{c}$ obtained by the estimator block (212) as follows:

$$\hat{c} = \frac{1 + \log(\Lambda(\mathbf{y}))}{2}.$$

where $\Lambda(\mathbf{y})$ is a likelihood ratio of transmitting with any of the first polarization and the second polarization of the transmitting antenna (110),
and the combined received signal $y^{\wedge}_{c+1}$ is calculated as:

$$y_{\hat{c}+1}\ r = (1 - P_2)y_1 + P_2 y_2 = \frac{y_1 + y_2 \Lambda(\mathbf{y})}{1 + \Lambda(\mathbf{y})}$$

**18.** The receiver (200) according to any of claims 16-17, wherein the estimator block (212) calculates the likelihood ratio $\Lambda(\mathbf{y})$ as:

$$\Lambda(\mathbf{y}) = \frac{\sum_{\tilde{s} \in S} \exp\left(-\frac{\|\mathbf{y} - \mathbf{h}_2 \tilde{s}\|^2}{\sigma_{w_2}^2}\right)}{\sum_{\tilde{s} \in S} \exp\left(-\frac{\|y - \mathbf{h}_1 \tilde{s}\|^2}{\sigma_{w_1}^2}\right)}.$$

where

$\mathbf{h_1}$ denotes a first channel vector of coordinates $(h_{11}, h_{21})$, $h_{11}$ being the co-channel signal across the first polarization of the transmitting antenna (110) and $h_{21}$ being the cross-channel signal across the first polarization of the transmitting antenna (110);
$\mathbf{h_2}$ denotes a second channel vector of coordinates $(h_{12}, h_{22})$, $h_{12}$ being the co-channel signal across the second polarization of the transmitting antenna (110) and $h_{22}$ is the cross-channel signal across the second polarization of the transmitting antenna (110);
$\sigma_{\omega 1}$ is noise variance of the noise contribution of the first polarization $w_1$, $\sigma_{\omega 2}$ is noise variance of the noise contribution of the second polarization $w_2$;
and $S$ is a constellation of symbols s.

**19.** Computer program comprising computer program code means adapted to perform the steps of the method according to any of claims 1 to 6, when said program is run on a computer, a digital signal processor, a field-programmable gate array, an application-specific integrated circuit, a micro-processor, a micro-controller, or any other form of programmable hardware.

**Patentansprüche**

1. Verfahren zum Bereitstellen einer Diversität bei der Polarisierung von Antennen, das umfasst, dass:

   - ein Symbol s, das b+1 Bits an Information enthält, durch einen Sender (100) gesendet wird,
   - ein Signal y durch einen Empfänger (200) empfangen wird, das die b+1 Bits an Information von dem empfangenen Signal y erhält,

   **dadurch gekennzeichnet, dass**

   - das Senden des Symbols s eine einzelne Sendeantenne (110) verwendet, die doppelt polarisiert ist, und das Symbol s, das die b Bits plus einem zusätzlichen Bit c enthält, unter Verwendung einer ersten Polarisierung oder einer zweiten Polarisierung der Sendeantenne (110) abhängig von dem zusätzlichen Bit c gesendet wird;
   - das Empfangen des Signals y eine einzelne Empfangsantenne (210) verwendet, die doppelt polarisiert ist, und ferner mit einem Schätzen des zusätzlichen Bits c, um zu bestimmen, ob die erste Polarisierung oder die zweite Polarisierung verwendet ist, um die b+1 Bits an Information zu erhalten.

2. Verfahren nach Anspruch 1, wobei das Empfangen des Signals y ein Empfangen eines Signals der ersten Polarisierung $y_1$ und eines Signals der zweiten Polarisierung $y_2$ durch die einzelne Empfangsantenne (210) umfasst, wobei:

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1 - c \\ c \end{pmatrix} s + \begin{pmatrix} w_1 \\ w_2 \end{pmatrix}$$

   wobei

   $h_{11}$ ein Gleichkanalsignal über die erste Polarisierung der Sendeantenne (110) ist,
   $h_{22}$ ein Gleichkanalsignal über die zweite Polarisierung der Sendeantenne (110) ist,
   $h_{21}$ ein Querkanalsignal über die erste Polarisierung der Sendeantenne (110) ist,
   $h_{12}$ ein Querkanalsignal über die zweite Polarisierung der Sendeantenne (110) ist,
   $w_1$ ein Rauschbeitrag der ersten Polarisierung ist und $w_2$ ein Rauschbeitrag der zweiten Polarisierung ist, und das empfangene Signal y aus dem Signal der ersten Polarisierung $y_1$ und dem Signal der zweiten Polarisierung $y_2$ besteht.

3. Verfahren nach Anspruch 2, wobei die b+1 Bits an Information von dem Empfänger (200) aus einem Signal $r_{c+1}$ erhalten werden, das aus dem Signal der ersten Polarisierung $y_1$ und dem Signal der zweiten Polarisierung $y_2$ gewählt ist, die durch ein geschätztes Bit $\hat{c}$ bestimmt ist, wobei das geschätzte Bit $\hat{c}$ durch Schätzen des zusätzlichen Bits c erhalten wird, wie folgt:

$$\hat{c} = \arg \max_i \left( |r_i|^2 \right) - 1$$

   wobei i = 1, 2;
   $r_1$ ein erstes abgestimmtes Signal von einem abgestimmten Filter des Empfängers (200) ist,
   $r_2$ ein zweites abgestimmtes Signal von dem abgestimmten Filter des Empfängers (200) ist,
   und wenn das erste abgestimmte Signal $r_1$ nur Rauschen ist, das gewählte Signal $r_{c+1}$ das z weite abgestimmte Signal $r_2$ ist;
   und wenn das zweite abgestimmte Signal $r_2$ nur Rauschen ist, das gewählte Signal $\hat{r}_{c+1}$ das erste abgestimmte Signal $r_1$ ist.

4. Verfahren nach Anspruch 2, wobei die b+1 Bits an Information von dem Empfänger (200) unter Verwendung eines Signals $y_{c+1}$ erhalten werden, das aus dem Signal der ersten Polarisierung $y_1$ und dem Signal der zweiten Polarisierung $y_2$ gewählt ist, die durch ein geschätztes Bit c bestimmt ist, wobei das geschätzte Bit $\hat{c}$ durch Schätzen des zusätzlichen Bits c erhalten wird, wie folgt:

$$\hat{c} = \frac{1 + \text{sign}\left(\log(\Lambda(\mathbf{y}))\right)}{2}$$

wobei $\Lambda(y)$ ein Wahrscheinlichkeitsverhältnis zum Senden mit einer der ersten Polarisierung und der zweiten Polarisierung der Sendeantenne (110) ist,

und das gewählte Signal $y_{\hat{c}+1}$ das Signal der zweiten Polarisierung $y_2$ ist, wenn das Wahrscheinlichkeitsverhältnis $\Lambda(y)$ $\Lambda(y) > 1$ ist; und ansonsten das gewählte Signal $y_{\hat{c}+1}$ das Signal der ersten Polarisierung $y_1$ ist.

5. Verfahren nach Anspruch 2, wobei die b+1 Bits an Information von dem Empfänger (200) aus einem kombinierten empfangenen Signal $y_{\hat{c}+1}$ unter Verwendung des Signals der ersten Polarisierung $y_1$ und des Signals der zweiten Polarisierung $y_2$ erhalten werden, die durch ein geschätztes Bit $\hat{c}$ bestimmt ist, wobei das geschätzte Bit $\hat{c}$ durch Schätzen des zusätzlichen Bits c erhalten wird, wie folgt:

$$\hat{c} = \frac{1 + \log(\Lambda(\mathbf{y}))}{2}$$

wobei $\Lambda(y)$ ein Wahrscheinlichkeitsverhältnis des Sendens mit einer der ersten Polarisierung und der zweiten Polarisierung der Sendeantenne (110) ist,

und das kombinierte empfangene Signal $y_{\hat{c}+1}$ berechnet wird wie folgt:

$$y_{\hat{c}+1} \; r = (1 - P_2)y_1 + P_2 y_2 = \frac{y_1 + y_2 \Lambda(\mathbf{y})}{1 + \Lambda(\mathbf{y})}$$

6. Verfahren nach einem der Ansprüche 4-5, wobei das Wahrscheinlichkeitsverhältnis $\Lambda(y)$ berechnet wird wie folgt:

$$\Lambda(\mathbf{y}) = \frac{\sum_{\tilde{s} \in \mathcal{S}} \exp\left(-\frac{\|\mathbf{y} - \mathbf{h}_2 \tilde{s}\|^2}{\sigma_{w_2}^2}\right)}{\sum_{\tilde{s} \in \mathcal{S}} \exp\left(-\frac{\|y - \mathbf{h}_1 \tilde{s}\|^2}{\sigma_{w_1}^2}\right)}$$

wobei

$h_1$ einen ersten Kanalvektor von Koordinaten ($h_{11}$, $h_{21}$) bezeichnet, wobei h11 das Gleichkanalsignal über die erste Polarisierung der Sendeantenne (110) ist und $h_{21}$ das Querkanalsignal über die erste Polarisierung der Sendeantenne (110) ist;

$h_2$ einen zweiten Kanalvektor von Koordinaten ($h_{12}$, $h_{22}$) bezeichnet, wobei $h_{12}$ das Gleichkanalsignal über die zweite Polarisierung der Sendeantenne (110) ist und $h_{22}$ das Querkanalsignal über die zweite Polarisierung der Sendeantenne (110) ist;

$\sigma_{\omega 1}$ eine Rauschvarianz des Rauschbeitrags der ersten Polarisierung $w_1$ ist,

$\sigma_{\omega 2}$ die Rauschvarianz des Rauschbeitrags der zweiten Polarisierung $w_2$ ist;

und $\delta$ eine Konstellation von Symbolen s ist.

7. System zum Bereitstellen einer Diversität bei der Polarisierung von Antennen, umfassend:

- einen Sender (100) zum Senden eines Symbols s, das b+1 Bits an Information enthält,
- einen Empfänger (200) zum Empfangen eines Signals y, das die b+1 Bits an Information von dem empfangenen Signal y erhält,

**dadurch gekennzeichnet, dass**

- der Sender (100) eine einzelne Sendeantenne (110) umfasst, die doppelt polarisiert zum Senden des Symbols s ist, wobei das Symbol s die b Bits plus einem zusätzlichen Bit c enthält und unter Verwendung einer ersten Polarisierung oder einer zweiten Polarisierung der Sendeantenne (110) abhängig von dem zusätzlichen Bit c gesendet ist;

- der Empfänger (200) eine einzelne Empfangsantenne (210) umfasst, die doppelt polarisiert zum Empfang des Signals y ist, und ferner einen Schätzblock (212) zum Schätzen des zusätzlichen Bits c umfasst, um zu bestimmen, ob die erste Polarisierung oder die zweite Polarisierung verwendet ist, um die b+1 Bits an Information zu erhalten.

8. System nach Anspruch 7, wobei die einzelne Empfangsantenne (210) zum Empfang eines Signals der ersten Polarisierung $y_1$ und eines Signals der zweiten Polarisierung $y_2$ konfiguriert ist, wobei:

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1-c \\ c \end{pmatrix} s + \begin{pmatrix} w_1 \\ w_2 \end{pmatrix}$$

wobei

$h_{11}$ ein Gleichkanalsignal über die erste Polarisierung der Sendeantenne (110) ist,

$h_{22}$ ein Gleichkanalsignal über die zweite Polarisierung der Sendeantenne (110) ist,

$h_{21}$ ein Querkanalsignal über die erste Polarisierung der Sendeantenne (110) ist,

$h_{12}$ ein Querkanalsignal über die zweite Polarisierung der Sendeantenne (110) ist,

$w_1$ ein Rauschbeitrag der ersten Polarisierung ist und $w_2$ ein Rauschbeitrag der zweiten Polarisierung ist,

und die einzelne Empfangsantenne (210) das Signal y empfängt, das aus dem Signal der ersten Polarisierung $y_1$ und dem Signal der zweiten Polarisierung $y_2$ besteht.

9. System nach Anspruch 8, wobei der Empfänger (200) ferner einen Decodierer (215) zum Decodieren der b+1 Bits an Information umfasst, wobei die b Bits aus einem Signal $r_{\hat{c}+1}$ erhalten werden, das aus dem Signal der ersten Polarisierung $y_1$ und dem Signal der zweiten Polarisierung $y_2$ gewählt ist, die durch das zusätzliche Bit c bestimmt ist, das ein geschätztes Bit $\hat{c}$ ist, das von dem Schätzblock (212) erhalten ist, wie folgt:

$$\hat{c} = \arg\max_i(|r_i|^2) - 1$$

wobei i = 1, 2;

$r_1$ ein erstes abgestimmtes Signal von einem abgestimmten Filter des Empfängers (200) ist,

$r_2$ ein zweites abgestimmtes Signal von dem abgestimmten Filter des Empfängers (200) ist,

und wenn das erste abgestimmte Signal $r_1$ nur Rauschen ist, das gewählte Signal $r_{\hat{c}+1}$ das zweite abgestimmte Signal $r_2$ ist;

und wenn das zweite abgestimmte Signal $r_2$ nur Rauschen ist, das gewählte Signal $r_{\hat{c}+1}$ das erste abgestimmte Signal $r_1$ ist.

10. System nach Anspruch 8, wobei der Empfänger (200) ferner einen Decodierer (215) zum Decodieren der b+1 Bits an Information umfasst, wobei die b Bits aus einem Signal $y_{\hat{c}+1}$ erhalten werden, das von dem Signal der ersten Polarisierung $y_1$ und dem Signal der zweiten Polarisierung $y_2$ gewählt ist, die von dem zusätzlichen Bit c bestimmt ist, das ein geschätztes Bit $\hat{c}$ ist, das von dem Schätzblock (212) erhalten wird, wie folgt:

$$\hat{c} = \frac{1 + \text{sign}\left(\log(\Lambda(\mathbf{y}))\right)}{2}$$

wobei $\Lambda(y)$ ein Wahrscheinlichkeitsverhältnis zum Senden mit einer der ersten Polarisierung und der zweiten Polarisierung der Sendeantenne (110) ist,

und das gewählte Signal $y_{\hat{c}+1}$ das Signal der zweiten Polarisierung $y_2$ ist, wenn das Wahrscheinlichkeitsverhältnis $\Lambda(y)$ $\Lambda(y) > 1$ ist; und ansonsten das gewählte Signal $y_{\hat{c}+1}$ das Signal der ersten Polarisierung $y_1$ ist.

**11.** System nach Anspruch 8, wobei der Empfänger (200) ferner einen Decodierer (215) zum Decodieren der b+1 Bits an Information umfasst, wobei die b Bits aus einem kombinierten empfangenen Signal $y_{\hat{c}+1}$ unter Verwendung des Signals der ersten Polarisierung $y_1$ und des Signals der zweiten Polarisierung $y_2$ erhalten sind, die von dem zusätzlichen Bit c bestimmt ist, das ein geschätztes Bit $\hat{c}$ ist, das von dem Schätzblock (212) erhalten ist, wie folgt:

$$\hat{c} = \frac{1 + \log(\Lambda(\mathbf{y}))}{2}$$

wobei $\Lambda(y)$ ein Wahrscheinlichkeitsverhältnis des Sendens mit einer der ersten Polarisierung und der zweiten Polarisierung der Sendeantenne (110) ist,
und das kombinierte empfangene Signal $y_{\hat{c}+1}$ berechnet wird wie folgt:

$$y_{\hat{c}+1}\ r = (1 - P_2)y_1 + P_2 y_2 = \frac{y_1 + y_2 \Lambda(\mathbf{y})}{1 + \Lambda(\mathbf{y})}$$

**12.** System nach einem der Ansprüche 10-11, wobei der Empfänger (200) das Wahrscheinlichkeitsverhältnis $\Lambda(y)$ berechnet wie:

$$\Lambda(\mathbf{y}) = \frac{\sum_{\tilde{s}\epsilon\mathcal{S}} \exp\left(-\frac{\|\mathbf{y}-\mathbf{h}_2\tilde{s}\|^2}{\sigma_{w_2}^2}\right)}{\sum_{\tilde{s}\epsilon\mathcal{S}} \exp\left(-\frac{\|y-\mathbf{h}_1\tilde{s}\|^2}{\sigma_{w_1}^2}\right)}$$

wobei

$h_1$ einen ersten Kanalvektor von Koordinaten ($h_{11}$, $h_{21}$) bezeichnet, wobei h11 das Gleichkanalsignal über die erste Polarisierung der Sendeantenne (110) ist und $h_{21}$ das Querkanalsignal über die erste Polarisierung der Sendeantenne (110) ist;
$h_2$ einen zweiten Kanalvektor von Koordinaten ($h_{12}$, $h_{22}$) bezeichnet, wobei $h_{12}$ das Gleichkanalsignal über die zweite Polarisierung der Sendeantenne (110) ist und $h_{22}$ das Querkanalsignal über die zweite Polarisierung der Sendeantenne (110) ist;
$\sigma_{\omega 1}$ eine Rauschvarianz des Rauschbeitrags der ersten Polarisierung $w_1$ ist,
$\sigma_{\omega 2}$ die Rauschvarianz des Rauschbeitrags der zweiten Polarisierung $w_2$ ist;
und $\delta$ eine Konstellation von Symbolen s ist.

**13.** Empfänger (200) zum Bereitstellen einer Diversität bei der Polarisierung von Antennen, **dadurch gekennzeichnet, dass** er umfasst:

- eine einzelne Empfangsantenne (210), die doppelt polarisiert zum Empfangen eines Signals y ist, um b+1 Bits an Information aus einem Symbol s zu erhalten, das von einem Sender (100) gesendet ist,
wobei das Symbol s die b Bits plus einem zusätzlichen Bit c enthält, wobei das Symbol s unter Verwendung einer ersten Polarisierung oder einer zweiten Polarisierung der Sendeantenne (110) abhängig von dem zusätzlichen Bit c gesendet ist,
- einen Schätzblock (212) zum Schätzen des zusätzlichen Bits c, um zu bestimmen, ob eine erste Polarisierung oder eine zweite Polarisierung verwendet ist, um die b+1 Bits an Information zu erhalten.

**14.** Empfänger (200) nach Anspruch 13, wobei die einzelne Empfangsantenne (210) zum Empfangen eines Signals der ersten Polarisierung $y_1$ und eines Signals der zweiten Polarisierung $y_2$ konfiguriert ist, wobei

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1-c \\ c \end{pmatrix} s + \begin{pmatrix} w_1 \\ w_2 \end{pmatrix}$$

wobei

$h_{11}$ ein Gleichkanalsignal über die erste Polarisierung der Sendeantenne (110) ist,
$h_{22}$ ein Gleichkanalsignal über die zweite Polarisierung der Sendeantenne (110) ist,
$h_{21}$ ein Querkanalsignal über die erste Polarisierung der Sendeantenne (110) ist,
$h_{12}$ ein Querkanalsignal über die zweite Polarisierung der Sendeantenne (110) ist,
$w_1$ ein Rauschbeitrag der ersten Polarisierung ist und $w_2$ ein Rauschbeitrag der zweiten Polarisierung ist,
und die einzelne Empfangsantenne (210) das Signal y empfängt, das aus dem Signal der ersten Polarisierung $y_1$ und dem Signal der zweiten Polarisierung $y_2$ besteht.

15. Empfänger (200) nach Anspruch 14, ferner mit einem Decodierer (215) zum Decodieren der b+1 Bits an Information, wobei die b Bits aus einem Signal $r_{c+1}$ erhalten sind, das aus dem Signal der ersten Polarisierung $y_1$ und dem Signal der zweiten Polarisierung $y_2$ gewählt ist, die durch das zusätzliche Bit c bestimmt ist, das ein geschätztes Bit $\hat{c}$ ist, das von dem Schätzblock (212) erhalten wird, wie folgt:

$$\hat{c} = \arg \max_i \left( |r_i|^2 \right) - 1$$

wobei i = 1, 2;

$r_1$ ein erstes abgestimmtes Signal von einem abgestimmten Filter des Empfängers (200) ist,
$r_2$ ein zweites abgestimmtes Signal von dem abgestimmten Filter des Empfängers (200) ist,
und wenn das erste abgestimmte Signal $r_1$ nur Rauschen ist, das gewählte Signal $r_{c+1}$ das zweite abgestimmte Signal $r_2$ ist;
und wenn das zweite abgestimmte Signal $r_2$ nur Rauschen ist, das gewählte Signal $r_{c+1}$ das erste abgestimmte Signal $r_1$ ist.

16. Empfänger (200) nach Anspruch 14, wobei der Empfänger (200) ferner einen Decodierer (215) zum Decodieren der b+1 Bits an Information umfasst, wobei die b Bits aus einem Signal $y_{c+1}$ erhalten werden, das aus dem Signal der ersten Polarisierung $y_1$ und dem Signal der zweiten Polarisierung $y_2$ gewählt ist, die durch das zusätzliche Bit c bestimmt ist, das ein geschätztes Bit $\hat{c}$ ist, das von dem Schätzblock (212) erhalten wird, wie folgt:

$$\hat{c} = \frac{1 + \text{sign}\left(\log(\Lambda(\mathbf{y}))\right)}{2}$$

wobei $\Lambda(y)$ ein Wahrscheinlichkeitsverhältnis zum Senden mit einer der ersten Polarisierung und der zweiten Polarisierung der Sendeantenne (110) ist,
und das gewählte Signal $y_{c+1}$ das Signal der zweiten Polarisierung $y_2$ ist, wenn das Wahrscheinlichkeitsverhältnis $\Lambda(y)$ $\Lambda(y) > 1$ ist; und ansonsten das gewählte Signal $y_{c+1}$ das Signal der ersten Polarisierung $y_1$ ist.

17. Empfänger (200) nach Anspruch 14, wobei der Empfänger (200) ferner einen Decodierer (215) zum Decodieren der b+1 Bits an Information umfasst, wobei die b Bits aus einem kombinierten empfangenen Signal $y_{c+1}$ unter Verwendung des Signals der ersten Polarisierung $y_1$ und des Signals der zweiten Polarisierung $y_2$ erhalten sind, die durch das zusätzliche Bit c bestimmt ist, das ein geschätztes Bit $\hat{c}$ ist, das von dem Schätzblock 212 erhalten wird, wie folgt:

$$\hat{c} = \frac{1 + \log(\Lambda(\mathbf{y}))}{2}$$

wobei $\Lambda(y)$ ein Wahrscheinlichkeitsverhältnis des Sendens mit einer der ersten Polarisierung und der zweiten Polarisierung der Sendeantenne (110) ist,
und das kombinierte empfangene Signal $\hat{y}_{c+1}$ berechnet wird wie folgt:

$$y_{\hat{c}+1}\ r = (1 - P_2)y_1 + P_2 y_2 = \frac{y_1 + y_2 \Lambda(\mathbf{y})}{1 + \Lambda(\mathbf{y})}$$

**18.** Empfänger (200) nach einem der Ansprüche 16-17, wobei der Schätzblock (212) das Wahrscheinlichkeitsverhältnis $\Lambda(y)$ berechnet wie folgt:

$$\Lambda(\mathbf{y}) = \frac{\sum_{\breve{s} \in \mathcal{S}} \exp\left(-\frac{\|\mathbf{y} - \mathbf{h}_2 \breve{s}\|^2}{\sigma_{w_2}^2}\right)}{\sum_{\breve{s} \in \mathcal{S}} \exp\left(-\frac{\|y - \mathbf{h}_1 \breve{s}\|^2}{\sigma_{w_1}^2}\right)}$$

wobei

$h_1$ einen ersten Kanalvektor von Koordinaten ($h_{11}$, $h_{21}$) bezeichnet, wobei $h_{11}$ das Gleichkanalsignal über die erste Polarisierung der Sendeantenne (110) ist und $h_{21}$ das Querkanalsignal über die erste Polarisierung der Sendeantenne (110) ist;
$h_2$ einen zweiten Kanalvektor von Koordinaten ($h_{12}$, $h_{22}$) bezeichnet, wobei $h_{12}$ das Gleichkanalsignal über die zweite Polarisierung der Sendeantenne (110) ist und $h_{22}$ das Querkanalsignal über die zweite Polarisierung der Sendeantenne (110) ist;
$\sigma_{\omega 1}$ eine Rauschvarianz des Rauschbeitrags der ersten Polarisierung $w_1$ ist,
$\sigma_{\omega 2}$ die Rauschvarianz des Rauschbeitrags der zweiten Polarisierung $w_2$ ist;
und $\delta$ eine Konstellation von Symbolen s ist.

**19.** Computerprogramm mit einem Computerprogrammcodemittel, das derart ausgebildet ist, die Schritte des Verfahrens nach einem der Ansprüche 1 bis 6 auszuführen, wenn das Programm an einem Computer, einem Digitalsignalprozessor, einem feldprogrammierbaren Gatearray, einer anwendungsspezifischen integrierten Schaltung, einem Mikroprozessor, einem Mikrocontroller oder irgendeiner anderen Form an programmierbarer Hardware betrieben wird.

**Revendications**

**1.** Procédé pour fournir une diversité de polarisation d'antennes, comprenant le fait :

- d'émettre un symbole *s* qui contient b+1 bits d'informations par un émetteur (100),
- de recevoir un signal *y* par un récepteur (200) qui obtient les b+1 bits d'informations à partir du signal reçu *y,*

**caractérisé en ce que** :

- l'émission du symbole s utilise une seule antenne d'émission (110) qui est à double polarisation et le symbole *s*, contenant les b bits plus un bit supplémentaire c, est émis en utilisant une première polarisation ou une deuxième polarisation de l'antenne d'émission (110) en fonction du bit supplémentaire c ;
- la réception du signal *y* utilise une seule antenne de réception (210) qui est à double polarisation et comprend en outre le fait d'estimer le bit supplémentaire c pour déterminer si la première polarisation ou la deuxième polarisation est utilisée pour obtenir les b+1 bits d'informations.

**2.** Procédé selon la revendication 1, dans lequel la réception du signal *y* comprend le fait de recevoir, par la seule antenne de réception (210), un signal de la première polarisation $y_1$ et un signal de la deuxième polarisation $y_2$, qui sont

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1-c \\ c \end{pmatrix} s + \begin{pmatrix} w_1 \\ w_2 \end{pmatrix}$$

où :

$h_{11}$ est un signal dans le même canal sur la première polarisation de l'antenne d'émission (110),
$h_{22}$ est un signal dans le même canal sur la deuxième polarisation de l'antenne d'émission (110),
$h_{21}$ est un signal entre les canaux sur la première polarisation de l'antenne d'émission (110),
$h_{12}$ est un signal entre les canaux sur la deuxième polarisation de l'antenne d'émission (110),
$w_1$ est un apport de bruit de la première polarisation et $w_2$ est un apport de bruit de la deuxième polarisation,
et le signal reçu $y$ est composé du signal de la première polarisation $y_1$ et du signal de la deuxième polarisation $y_2$.

3. Procédé selon la revendication 2, dans lequel les b+1 bits d'informations sont obtenus par le récepteur (200) à partir d'un signal $r_{\hat{c}+1}$ choisi entre le signal de la première polarisation $y_1$ et le signal de la deuxième polarisation $y_2$ qui est déterminée par un bit estimé $\hat{c}$, le bit estimé $\hat{c}$ étant obtenu en estimant le bit supplémentaire c comme suit :

$$\hat{c} = \arg \max_i \left( |r_i|^2 \right) - 1.$$

où i = 1, 2 ;
$r_1$ est un premier signal adapté provenant d'un filtre adapté du récepteur (200),
$r_2$ est un deuxième signal adapté provenant du filtre adapté du récepteur (200),
et si le premier signal adapté $r_1$ est seulement du bruit, le signal choisi $r_{\hat{c}+1}$ est le deuxième signal adapté $r_2$,
et si le deuxième signal adapté $r_2$ est seulement du bruit, le signal choisi $r_{\hat{c}+1}$ est le premier signal adapté $r_1$.

4. Procédé selon la revendication 2, dans lequel les b+1 bits d'informations sont obtenus par le récepteur (200) en utilisant un signal $y_{\hat{c}+1}$ choisi entre le signal de la première polarisation $y_1$ et le signal de la deuxième polarisation $y_2$ qui est déterminée par un bit estimé $\hat{c}$, le bit estimé $\hat{c}$ étant obtenu en estimant le bit supplémentaire c comme suit :

$$\hat{c} = \frac{1 + \mathrm{sign}\left( \log(\Lambda(\mathbf{y})) \right)}{2}.$$

où $\Lambda(y)$ est un rapport de vraisemblance d'émission avec l'une de la première polarisation et de la deuxième polarisation de l'antenne d'émission (110),
et le signal choisi $y_{\hat{c}+1}$ est le signal de la deuxième polarisation $y_2$, si le rapport de vraisemblance $\Lambda(y)$ est $\Lambda(y)$ > 1 ; et sinon, le signal choisi $y_{\hat{c}+1}$ est le signal de la première polarisation $y_1$.

5. Procédé selon la revendication 2, dans lequel les b+1 bits d'informations sont obtenus par le récepteur (200) à partir d'un signal reçu combiné $y_{\hat{c}+1}$ en utilisant le signal de la première polarisation $y_1$ et le signal de la deuxième polarisation $y_2$ qui est déterminée par un bit estimé $\hat{c}$, le bit estimé étant $\hat{c}$ obtenu en estimant le bit supplémentaire c comme suit :

$$\hat{c} = \frac{1 + \log(\Lambda(\mathbf{y}))}{2}.$$

où $\Lambda(y)$ est un rapport de vraisemblance d'émission avec l'une de la première polarisation et de la deuxième polarisation de l'antenne d'émission (110),
et le signal reçu combiné $y_{\hat{c}+1}$ est calculé comme suit :

$$y_{\hat{c}+1}\ r = (1 - P_2)y_1 + P_2 y_2 = \frac{y_1 + y_2 \Lambda(\mathbf{y})}{1 + \Lambda(\mathbf{y})}$$

.

**6.** Procédé selon l'une des revendications 4 et 5, dans lequel le rapport de vraisemblance $\Lambda(y)$ est calculé comme suit :

$$\Lambda(\mathbf{y}) = \frac{\sum_{\tilde{s}\epsilon\mathcal{S}} \exp\left(-\frac{\|\mathbf{y}-\mathbf{h}_2\tilde{s}\|^2}{\sigma^2_{w_2}}\right)}{\sum_{\tilde{s}\epsilon\mathcal{S}} \exp\left(-\frac{\|y-\mathbf{h}_1\tilde{s}\|^2}{\sigma^2_{w_1}}\right)}.$$

où :

$\mathbf{h}_1$ désigne un premier vecteur de canal de coordonnées ($h_{11}$, $h_{21}$), $h_{11}$ étant le signal dans le même canal sur la première polarisation de l'antenne d'émission (110) et $h_{21}$ étant le signal entre les canaux sur la première polarisation de l'antenne d'émission (110) ;

$\mathbf{h}_2$ désigne un deuxième vecteur de canal de coordonnées ($h_{12}$, $h_{22}$), $h_{12}$ étant le signal dans le même canal sur la deuxième polarisation de l'antenne d'émission (110) et $h_{22}$ est le signal entre les canaux sur la deuxième polarisation de l'antenne d'émission (110) ;

$\sigma_{\omega 1}$ est une variance de bruit de l'apport de bruit de la première polarisation $w_1$, $\sigma_{\omega 2}$ est une variance de bruit de l'apport de bruit de la deuxième polarisation $w_2$ ;

et $S$ est une constellation de symboles s.

**7.** Système pour fournir une diversité de polarisation d'antennes, comprenant :

- un émetteur (100) pour émettre un symbole s qui contient b+1 bits d'informations,
- un récepteur (200) pour recevoir un signal $y$ qui obtient les b+1 bits d'informations à partir du signal reçu $y$,

**caractérisé en ce que** :

- l'émetteur (100) comprend une seule antenne d'émission (110) qui est à double polarisation pour émettre le symbole s, le symbole s contenant les b bits plus un bit supplémentaire c et étant émis en utilisant une première polarisation ou une deuxième polarisation de l'antenne d'émission (110) en fonction du bit supplémentaire c ;
- le récepteur (200) comprend une seule antenne de réception (210) qui est à double polarisation pour recevoir le signal $y$ et comprend en outre un bloc estimateur (212) pour estimer le bit supplémentaire c afin de déterminer si la première polarisation ou la deuxième polarisation est utilisée pour obtenir les b+1 bits d'informations.

**8.** Système selon la revendication 7, dans lequel la seule antenne de réception (210) est configurée pour recevoir un signal de la première polarisation $y_1$ et un signal de la deuxième polarisation $y_2$, qui sont

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1-c \\ c \end{pmatrix} s + \begin{pmatrix} w_1 \\ w_2 \end{pmatrix}$$

où :

$h_{11}$ est un signal dans le même canal sur la première polarisation de l'antenne d'émission (110),
$h_{22}$ est un signal dans le même canal sur la deuxième polarisation de l'antenne d'émission (110),
$h_{21}$ est un signal entre les canaux sur la première polarisation de l'antenne d'émission (110),
$h_{12}$ est un signal entre les canaux sur la deuxième polarisation de l'antenne d'émission (110),
$w_1$ est un apport de bruit de la première polarisation et $w_2$ est un apport de bruit de la deuxième polarisation,
et la seule antenne de réception (210) reçoit le signal $y$ composé du signal de la première polarisation $y_1$ et du signal de la deuxième polarisation $y_2$.

**9.** Système selon la revendication 8, dans lequel le récepteur (200) comprend en outre un décodeur (215) pour décoder les b+1 bits d'informations, en obtenant les b bits à partir d'un signal $r_{\hat{c}+1}$ choisi entre le signal de la première polarisation $y_1$ et le signal de la deuxième polarisation $y_2$ qui est déterminée par le bit supplémentaire c qui est un bit estimé $\hat{c}$ obtenu par le bloc estimateur (212) comme suit :

$$\hat{c} = \arg\max_i\left(|r_i|^2\right) - 1.$$

où i = 1, 2 ;
$r_1$ est un premier signal adapté provenant d'un filtre adapté du récepteur (200),
$r_2$ est un deuxième signal adapté provenant du filtre adapté du récepteur (200),
et si le premier signal adapté $r_1$ est seulement du bruit, le signal choisi $\hat{r}_{c+1}$ est le deuxième signal adapté $r_2$,
et si le deuxième signal adapté $r_2$ est seulement du bruit, le signal choisi $\hat{r}_{c+1}$ est le premier signal adapté $r_1$.

**10.** Système selon la revendication 8, dans lequel le récepteur (200) comprend en outre un décodeur (215) pour décoder les b+1 bits d'informations, en obtenant les b bits à partir d'un signal $y_{\hat{c}+1}$ choisi entre le signal de la première polarisation $y_1$ et le signal de la deuxième polarisation $y_2$ qui est déterminée par le bit supplémentaire c qui est un bit estimé $\hat{c}$ obtenu par le bloc estimateur (212) comme suit :

$$\hat{c} = \frac{1 + \operatorname{sign}\left(\log(\Lambda(\mathbf{y}))\right)}{2}.$$

où $\Lambda(y)$ est un rapport de vraisemblance d'émission avec l'une de la première polarisation et de la deuxième polarisation de l'antenne d'émission (110),
et le signal choisi $y_{\hat{c}+1}$ est le signal de la deuxième polarisation $y_2$ si le rapport de vraisemblance $\Lambda(y)$ est $\Lambda(y)$ > 1 ; et sinon, le signal choisi $y_{\hat{c}+1}$ est le signal de la première polarisation $y1$.

**11.** Système selon la revendication 8, dans lequel le récepteur (200) comprend en outre un décodeur (215) pour décoder les b+1 bits d'informations, en obtenant les b bits à partir d'un signal reçu combiné $y_{\hat{c}+1}$ en utilisant le signal de la première polarisation $y_1$ et le signal de la deuxième polarisation $y_2$ qui est déterminée par le bit supplémentaire c qui est un bit estimé $\hat{c}$ obtenu par le bloc estimateur (212) comme suit :

$$\hat{c} = \frac{1 + \log(\Lambda(\mathbf{y}))}{2}.$$

où $\Lambda(y)$ est un rapport de vraisemblance d'émission avec l'une de la première polarisation et de la deuxième polarisation de l'antenne d'émission (110),
et le signal reçu combiné $y_{\hat{c}+1}$ est calculé comme suit :

$$y_{\hat{c}+1}\ r = (1 - P_2)y_1 + P_2 y_2 = \frac{y_1 + y_2 \Lambda(\mathbf{y})}{1 + \Lambda(\mathbf{y})}\ .$$

**12.** Système selon l'une des revendications 10 et 11, dans lequel le récepteur (200) calcule le rapport de vraisemblance $\Lambda(y)$ comme suit :

$$\Lambda(\mathbf{y}) = \frac{\sum_{\tilde{s}\in S}\exp\left(-\frac{\|\mathbf{y} - \mathbf{h}_2\tilde{s}\|^2}{\sigma_{w_2}^2}\right)}{\sum_{\tilde{s}\in S}\exp\left(-\frac{\|y - \mathbf{h}_1\tilde{s}\|^2}{\sigma_{w_1}^2}\right)}.$$

où :

$\mathbf{h}_1$ désigne un premier vecteur de canal de coordonnées $(h_{11}, h_{21})$, $h_{11}$ étant le signal dans le même canal sur la première polarisation de l'antenne d'émission (110) et $h_{21}$ étant le signal entre les canaux sur la première polarisation de l'antenne d'émission (110) ;
$\mathbf{h}_2$ désigne un deuxième vecteur de canal de coordonnées $(h_{12}, h_{22})$, $h_{12}$ étant le signal dans le même canal sur la deuxième polarisation de l'antenne d'émission (110) et $h_{22}$ est le signal entre les canaux sur la deuxième polarisation de l'antenne d'émission (110) ;

$\sigma_{\omega 1}$ est une variance de bruit de l'apport de bruit de la première polarisation $w_1$, $\sigma_{\omega 2}$ est une variance de bruit de l'apport de bruit de la deuxième polarisation $w_2$ ;

et $S$ est une constellation de symboles s.

**13.** Récepteur (200) pour fournir une diversité de polarisation d'antennes, **caractérisé en ce qu'**il comprend :

- une seule antenne de réception (210) qui est à double polarisation pour recevoir un signal $y$ afin d'obtenir b+1 bits d'informations à partir d'un symbole s émis par un émetteur (100), le symbole s contenant les b bits plus un bit supplémentaire c, le symbole s étant émis en utilisant une première polarisation ou une deuxième polarisation de l'antenne d'émission (110) en fonction du bit supplémentaire c,
- un bloc estimateur (212) pour estimer le bit supplémentaire c afin de déterminer si une première polarisation ou une deuxième polarisation est utilisée pour obtenir les b+1 bits d'informations.

**14.** Récepteur (200) selon la revendication 13, dans lequel la seule antenne de réception (210) est configurée pour recevoir un signal de la première polarisation $y_1$ et un signal de la deuxième polarisation $y_2$, qui sont

$$\begin{pmatrix} y_1 \\ y_2 \end{pmatrix} = \begin{pmatrix} h_{11} & h_{12} \\ h_{21} & h_{22} \end{pmatrix} \begin{pmatrix} 1-c \\ c \end{pmatrix} s + \begin{pmatrix} w_1 \\ w_2 \end{pmatrix}$$

où :

$h_{11}$ est un signal dans le même canal sur la première polarisation de l'antenne d'émission (110),

$h_{22}$ est un signal dans le même canal sur la deuxième polarisation de l'antenne d'émission (110),

$h_{21}$ est un signal entre les canaux sur la première polarisation de l'antenne d'émission (110),

$h_{12}$ est un signal entre les canaux sur la deuxième polarisation de l'antenne d'émission (110),

$w_1$ est un apport de bruit de la première polarisation et $w_2$ est un apport de bruit de la deuxième polarisation,

et la seule antenne de réception (210) reçoit le signal $y$ composé du signal de la première polarisation $y_1$ et du signal de la deuxième polarisation $y_2$.

**15.** Récepteur (200) selon la revendication 14, comprenant en outre un décodeur (215) pour décoder les b+1 bits d'informations, en obtenant les b bits à partir d'un signal $r_{\hat{c}+1}$ choisi entre le signal de la première polarisation $y_1$ et le signal de la deuxième polarisation $y_2$ qui est déterminée par le bit supplémentaire c qui est un bit estimé $\hat{c}$ obtenu par le bloc estimateur (212) comme suit :

$$\hat{c} = \arg \max_i \left( |r_i|^2 \right) - 1.$$

où i = 1, 2 ;

$r_1$ est un premier signal adapté provenant d'un filtre adapté du récepteur (200),

$r_2$ est un deuxième signal adapté provenant du filtre adapté du récepteur (200),

et si le premier signal adapté $r_1$ est seulement du bruit, le signal choisi $r_{\hat{c}+1}$ est le deuxième signal adapté $r_2$,

et si le deuxième signal adapté $r_2$ est seulement du bruit, le signal choisi $r_{\hat{c}+1}$ est le premier signal adapté $r_1$.

**16.** Récepteur (200) selon la revendication 14, le récepteur (200) comprenant en outre un décodeur (215) pour décoder les b+1 bits d'informations, en obtenant les b bits à partir d'un signal $y_{\hat{c}+1}$ choisi entre le signal de la première polarisation $y_1$ et le signal de la deuxième polarisation $y_2$ qui est déterminée par le bit supplémentaire c qui est un bit estimé $\hat{c}$ obtenu par le bloc estimateur (212) comme suit :

$$\hat{c} = \frac{1 + \text{sign}\left( \log(\Lambda(\mathbf{y})) \right)}{2}.$$

où $\Lambda(y)$ est un rapport de vraisemblance d'émission avec l'une de la première polarisation et de la deuxième polarisation de l'antenne d'émission (110),
et le signal choisi $y_{\hat{c}+1}$ est le signal de la deuxième polarisation $y_2$ si le rapport de vraisemblance $\Lambda(y)$ est $\Lambda(y) > 1$ ; et sinon, le signal choisi $y_{\hat{c}+1}$ est le signal de la première polarisation $y_1$.

**17.** Récepteur (200) selon la revendication 14, le récepteur (200) comprenant en outre un décodeur (215) pour décoder les b+1 bits d'informations, en obtenant les b bits à partir d'un signal reçu combiné $y_{\hat{c}+1}$ en utilisant le signal de la première polarisation $y_1$ et le signal de la deuxième polarisation $y_2$ qui est déterminée par le bit supplémentaire c qui est un bit estimé $\hat{c}$ obtenu par le bloc estimateur (212) comme suit :

$$\hat{c} = \frac{1 + \log(\Lambda(\mathbf{y}))}{2}.$$

où $\Lambda(y)$ est un rapport de vraisemblance d'émission avec l'une de la première polarisation et de la deuxième polarisation de l'antenne d'émission (110),
et le signal reçu combiné $y_{\hat{c}+1}$ est calculé comme suit :

$$y_{\hat{c}+1}\ r = (1 - P_2)y_1 + P_2 y_2 = \frac{y_1 + y_2\Lambda(\mathbf{y})}{1 + \Lambda(\mathbf{y})}.$$

**18.** Récepteur (200) selon l'une des revendications 16 et 17, dans lequel le bloc estimateur (212) calcule le rapport de vraisemblance $\Lambda(y)$ comme suit :

$$\Lambda(\mathbf{y}) = \frac{\sum_{\tilde{s}\in\mathcal{S}} \exp\left(-\frac{\|\mathbf{y}-\mathbf{h}_2\tilde{s}\|^2}{\sigma_{w_2}^2}\right)}{\sum_{\tilde{s}\in\mathcal{S}} \exp\left(-\frac{\|y-\mathbf{h}_1\tilde{s}\|^2}{\sigma_{w_1}^2}\right)}.$$

où :

$\mathbf{h}_1$ désigne un premier vecteur de canal de coordonnées $(h_{11}, h_{21})$, $h_{11}$ étant le signal dans le même canal sur la première polarisation de l'antenne d'émission (110) et $h_{21}$ étant le signal entre les canaux sur la première polarisation de l'antenne d'émission (110) ;
$\mathbf{h}_2$ désigne un deuxième vecteur de canal de coordonnées $(h_{12}, h_{22})$, $h_{12}$ étant le signal dans le même canal sur la deuxième polarisation de l'antenne d'émission (110) et $h_{22}$ est le signal entre les canaux sur la deuxième polarisation de l'antenne d'émission (110) ;
$\sigma_{\omega 1}$ est une variance de bruit de l'apport de bruit de la première polarisation $w_1$, $\sigma_{\omega 2}$ est une variance de bruit de l'apport de bruit de la deuxième polarisation $w_2$ ;
et $S$ est une constellation de symboles s.

**19.** Programme informatique comprenant un moyen de code de programme informatique adapté pour effectuer les étapes du procédé selon l'une des revendications 1 à 6, lorsque ledit programme est exécuté sur un ordinateur, un processeur de signal numérique, un réseau prédiffusé programmable par l'utilisateur, un circuit intégré à application spécifique, un microprocesseur, un microcontrôleur ou toute autre forme de matériel programmable.

**FIG. 1**

EP 3 100 371 B1

EP 3 100 371 B1

**FIG. 2**

**FIG. 3**

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5822429 A

### Non-patent literature cited in the description

- **A. I. PEREZ-NEIRA et al.** Statistical Modeling of Dual-Polarized MIMO Land Mobile Satellite Channels. *IEEE Transactions on Communications,* 2010, vol. 58 (11), 3077-3083
- **A. I. PEREZ-NEIRA et al.** Dual polarization for {MIMO} processing in multibeam satellite systems. *International Workshop on Signal Processing for Space Communications,* 2008

- **SHUANG ZHAO et al.** SINGLE ANTENNA SPACIAL DIVERSITY. *International Conference on Wireless Communications, Networking and Mobile Computing,* 2009